# EUROPÄISCHE PATENTSCHRIFT

(11) **EP 2 902 243 B1**
(45) Veröffentlichungstag und Bekanntmachung des Hinweises auf die Patenterteilung: **07.07.2021**
(21) Anmeldenummer: 15152305.7
(22) Anmeldetag: 23.01.2015
(51) Int. Cl.: B60L 50/52, B60L 58/12

(54) **Verfahren und Vorrichtung zum Anzeigen von Fahrzeugparametern**
Method and device for displaying vehicle parameters
Procédé et dispositif d'affichage de paramètres de véhicule

(30) Priorität: 03.02.2014 DE 102014201863
(43) Veröffentlichungstag der Anmeldung: 05.08.2015
(73) Patentinhaber: Volkswagen Aktiengesellschaft, 38440 Wolfsburg (DE)
(72) Erfinder: Kassner, Astrid, 38104 Braunschweig (DE); Joachim, Manuel, 38110 Braunschweig (DE); Mischke, Michael, 10245 Berlin (DE)

(56) Entgegenhaltungen:
- EP-A1- 2 489 990
- DE-A1-102011 018 899
- US-A1- 2012 179 318
- None

## Beschreibung

Die vorliegende Erfindung betrifft ein Verfahren und eine Vorrichtung zum Anzeigen von Fahrzeugparametern, die zumindest einen ersten und einen zweiten Parameter umfassen. Ferner betrifft die Erfindung ein Elektrofahrzeug mit einer solchen Vorrichtung.

Die Anzeige von Fahrzeugparametern beschränkt sich in der Regel auf eine für jeden Fahrzeugparameter separate Anzeige. Dabei wird dem Fahrer angezeigt, welcher Parameter zum momentanen Zeitpunkt welchen Wert aufweist. So werden beispielsweise eine Temperatur, eine mit dem vorhandenen Energievorrat erreichbare Restreichweite, eine zurückgelegte Strecke, dem Energievorrat, die gefahrene Geschwindigkeit oder eine Motordrehzahl als konkrete Zahlen ausgegeben. Dabei ist ein Zusammenhang zwischen den unterschiedlichen Fahrparametern für einen Fahrer nicht erkennbar. Insbesondere in Fahrzeugen, die ihre Energie für den Antrieb zumindest teilweise aus einer Batterie beziehen, ist es jedoch wünschenswert, dem Fahrer einen Zusammenhang zwischen den unterschiedlichen Parametern zu verdeutlichen.

Dazu ist in der DE 10 2010 010 620 A1 eine integrierte Reichweitenanzeige beschrieben. Die Anzeige macht einen Zeitpunkt kenntlich, von dem an eine Rückkehr des Kraftfahrzeugs zu einem vorbestimmten Ausgangspunkt aufgrund eines unzureichenden Energievorrats nicht mehr möglich ist.

Die DE 10 2011 018 899 A1 beschreibt ein Verfahren zum Unterstützen eines Fahrers beim Auswerten batteriebezogener Informationen eines elektrisch angetriebenen Kraftfahrzeugs. Dabei werden der Energiegehalt der Batterie oder eine Reichweite zu unterschiedlichen Zeitpunkten dargestellt.

Die US 2012/179318 A1 beschreibt ein System und Verfahren zur Informationsanzeige für ein Fahrzeug, bei welchem der Ladezustand einer Batterie, der bisherige Reiseweg und eine Reichweiteninformation auf einem Display angezeigt werden. Weiterhin wird eine Mangel/Überschuss-Information, welche aus dem Batterieladezustand bzw. der Fahrzeugreichweite und der Reisedistanz hervorgeht, sichtbar für den Benutzer erzeugt. Die Informationsanzeige kann Zahlenwerte und/oder eine grafische Darstellung der erzeugten Werte enthalten. Bei der grafischen Darstellung kann die Anzeige in Balkenform aus einer Fahrtentfernungszone, einer Zielentfernungszone und einer Mangel- oder Überschusszone bestehen.

Der vorliegenden Erfindung liegt die Aufgabe zugrunde, ein Verfahren und eine Vorrichtung bereitzustellen, mittels welchen der Zusammenhang zwischen verschiedenen Fahrzeugparametern deutlich wird.

Diese Aufgabe wird durch ein Verfahren nach Anspruch 1 und eine Vorrichtung nach Anspruch 6 gelöst. Vorteilhafte Ausgestaltungen und Weiterbildungen sind Gegenstände der abhängigen Ansprüche.

Bei dem erfindungsgemäßen Verfahren werden ein Wert des ersten und ein Wert des zweiten Parameters ermittelt. Der Wert des ersten und der Wert des zweiten Parameters werden auf einer Anzeigefläche angezeigt. Der Wert des ersten Parameters wird verändert. Dabei wird die Veränderung des Werts des ersten Parameters zumindest zu einem ersten Anteil in eine Veränderung des Werts des zweiten Parameters umgesetzt. Auf der Anzeigefläche wird ein erstes Anzeigeelement erzeugt, mittels welchem die Umsetzung der Veränderung des Werts des ersten Parameters in die Veränderung des Werts des zweiten Parameters graphisch dargestellt wird.

Die Anzeige des Werts des ersten Parameters und des zweiten Parameters muss dabei nicht über numerisch angezeigte Werte erfolgen. Beispielsweise kann die Anzeige des Werts auch über die Größe oder Länge eines graphischen Elements erfolgen.

Durch das erste Anzeigeelement wird dem Fahrer zunächst verdeutlicht, dass der erste Parameter überhaupt in irgendeiner Weise in den zweiten Parameter umgesetzt wird. Dadurch wird für den Fahrer sofort ersichtlich, dass sich eine Veränderung des ersten Parameters auf den zweiten Parameter auswirkt. Als erstes Anzeigeelement wird dabei insbesondere ein einzelnes Anzeigeelement verstanden, welches die Umsetzung der Veränderung des Werts des ersten Parameters in die Veränderung des Werts des zweiten Parameters graphisch darstellt. Beispielsweise kann dies über eine einfache, aber aussagekräftige Animation erfolgen.

Bei dem erfindungsgemäßen Verfahren wird die Größe des ersten Anteils ermittelt. Das erste Anzeigeelement wird als erstes längliches Objekt in einer ersten Position auf einer Anzeigefläche erzeugt. Die Umsetzung der Veränderung des Werts des ersten Parameters in die Veränderung des Werts des zweiten Parameters wird dadurch dargestellt, dass das erste längliche Objekt von der ersten Position in eine zweite Position verschoben wird, wobei die Weite der Verschiebung von der Größe des ersten Anteils abhängig ist. Dadurch, dass die Weite der Verschiebung von der Größe des ersten Anteils abhängig ist, wird dem Fahrer nicht nur angezeigt, dass die Veränderung des ersten Parameters in die Veränderung des zweiten Parameters umgesetzt wird. Zusätzlich wird dem Fahrer auch angezeigt, wie stark sich die Veränderung des ersten Parameters auf die Veränderung des zweiten Parameters auswirkt.

Bei dem erfindungsgemäßen Verfahren hängt der erste Parameter zu einem zweiten Anteil von weiteren Parametern ab. Die Größe des zweiten Anteils wird ermittelt. Weiterhin wird das erste Anzeigeelement als erstes längliches Objekt mit einer ersten Länge auf der Anzeigefläche erzeugt. In Abhängigkeit von der Größe des zweiten Anteils wird dann die erste Länge des ersten länglichen Objekts auf eine zweite Länge verändert.
Der zweite Anteil zeigt demnach einen Einfluss der weiteren Parameter auf die Veränderung des ersten Parameters an. Der Fahrer kann also anhand eines einzigen Anzeigeelements sowohl die Umsetzung der Veränderung des ersten Parameters in die Veränderung des zweiten Parameters nachvollziehen, wie auch erfassen, dass weitere Parameter einen Einfluss auf die Veränderung des ersten Parameters haben. Dabei wird durch eine Längenänderung des ersten Anzeigeelements dargestellt, wie groß der Anteil der weiteren Parameter an der Veränderung des ersten Parameters ist.

Erfindungsgemäß wird eine Markierung angezeigt. Nach der Verschiebung wird das erste Anzeigeelement von der Markierung in einen ersten Teil und einen zweiten Teil geteilt, wobei die Länge des ersten Teils den Wert des ersten Parameters nach der Veränderung des Werts des ersten Parameters und die Länge des zweiten Teils den Wert des zweiten Parameters nach der Veränderung des Werts des ersten Parameters darstellen. Die Länge des zweiten Teils des ersten Anzeigeelements verdeutlicht insbesondere die Weite bzw. das Maß der Verschiebung des ersten Anzeigeelements. Zudem kann der Fahrer leichter erkennen, dass zusätzlich zu der Verschiebung die Länge des ersten Teils des ersten Anzeigeelements verkürzt wird. Ein Einfluss weiterer Parameter auf den Wert des ersten Parameters ist dadurch leichter zu erkennen.

Erfindungsgemäß wird der Wert eines dritten Parameters ermittelt, wobei eine Veränderung des Werts des dritten Parameters von der Veränderung des Werts des ersten Parameters abhängig ist, und der Wert des dritten Parameters auf der Anzeigefläche angezeigt wird.

Erfindungsgemäß wird der Wert des dritten Parameters als Länge eines zweiten Anzeigeelements dargestellt, welches angrenzend an das erste Anzeigeelement als zweites längliches Objekt mit einem ersten Ende und einem zweiten Ende auf der Anzeigefläche angezeigt wird. Die Veränderung des Werts des dritten Parameters aufgrund einer Veränderung des ersten Parameters zu dem ersten Anteil wird durch eine Längenänderung des zweiten länglichen Objekts am ersten Ende entsprechend der Länge des zweiten Teils des ersten Anzeigeelements dargestellt. Die Veränderung des dritten Parameters aufgrund einer Veränderung des ersten Parameters zu dem zweiten Anteil wird durch eine Längenänderung des zweiten länglichen Objekts am zweiten Ende dargestellt. Dadurch wird dem Fahrer verdeutlicht, dass eine Veränderung des Werts des ersten Parameters nicht nur einen Einfluss auf den zweiten, sondern auch auf den dritten Parameter hat, und dass sich dabei die Veränderung des Werts des ersten Parameters um beide Anteile auf den Wert des dritten Parameters auswirkt.

Erfindungsgemäß ist der erste Parameter ein Energievorrat, der zweite Parameter eine zurückgelegte Strecke und/oder der dritte Parameter eine Restreichweite. Diese drei Parameter sind insbesondere bei Elektrofahrzeugen die wesentlichen Parameter. Durch das erfindungsgemäße Verfahren kann der Fahrer die Umsetzung von Energie in Fahrstrecke sowie deren Auswirkung auf die Restreichweite deutlich erkennen. Zudem wird dem Fahrer ein Einfluss weiterer Parameter auf die Veränderung des Energievorrats und die Auswirkungen der Veränderung des Energievorrats auf die Restreichweite graphisch verdeutlicht. Dadurch kann der Fahrer insbesondere besser abschätzen, wie er fahren muss, um eine hohen Anteil an Energie in zurückgelegte Strecke umzusetzen.

Das erfindungsgemäße Verfahren kann dann vorteilhafterweise dazu führen, dass der Fahrer in einen Wettbewerb mit sich selbst tritt. Da ihm ständig vergegenwärtigt wird, welcher Anteil des Energievorrats in tatsächlich zurückgelegte Strecke umgesetzt wird, kann der Fahrer im Laufe der Zeit lernen, welches Fahrverhalten zu einer möglichst langen, mit einer Batterieladung zurückgelegten Strecke führt. Das erfindungsgemäße Verfahren regt den Fahrer also insbesondere zu einem energiesparenden Fahrverhalten an.

In einer weiteren Ausgestaltung ist der erste Parameter ein Energievorrat. Es werden die weiteren Parameter in Kategorien zusammengefasst und es wird der Einfluss jeder Kategorie von weiteren Parametern auf den Energievorrat ermittelt. Da der Einfluss der Kategorien weiterer Parameter auf den Energievorrat angezeigt wird, wird dem Fahrer insbesondere auch der Einfluss der Kategorien weiterer Parameter auf die Restreichweite verdeutlicht. Für jede Kategorie von weiteren Parametern wird dann ein graphisches Element auf der Anzeigefläche erzeugt, welches den Einfluss der weiteren Parameter auf den Energievorrat bzw. die Restreichweite anzeigt. Dadurch wird dem Fahrer die Größe des Einflusses jeder einzelnen Kategorie weiterer Parameter auf den Energievorrat bzw. die Restreichweite verdeutlicht.

Insbesondere stellen die graphischen Elemente für die unterschiedlichen Kategorien eine Markierung dar, die das erste Anzeigeelement in einen ersten und einen zweiten Teil teilt.

Dabei umfassen die graphischen Elemente zumindest zwei Indikatorelemente, von denen zumindest eines hervorgehoben, insbesondere gefärbt, dargestellt wird, wobei die Anzahl der hervorgehoben dargestellten Indikatorelemente und/oder die Art der Hervorhebung, z.B. die Farbe, der Indikatorelemente die Größe des Einflusses der Kategorie der weiteren Parameter auf den ersten Parameter anzeigen/anzeigt. Da der dritte Parameter von dem ersten Parameter abhängt, wird insbesondere auch ein Einfluss der Kategorie der weiteren Parameter auf den dritten Parameter angezeigt. Die Hervorhebung wird dabei insbesondere dadurch erreicht, dass die Indikatorelemente in einer bestimmten Farbe dargestellt werden. So können rote Indikatorelemente einen großen Einfluss, orange Indikatorelemente einen mittelmäßigen Einfluss und grüne Indikatorelemente einen geringen Einfluss der Kategorie der weiteren Parameter auf den ersten bzw. dritten Parameter anzeigen.

Bevorzugt werden die weiteren Parameter in drei Kategorien aufgeteilt, wobei eine erste Kategorie ein Fahrmodus, eine zweite Kategorie eine Fahrweise und/oder eine dritte Kategorie eine Navigation ist. Dabei umfasst die Kategorie Fahrmodus Konfigurationen für Klimatisierung, Antriebsverhalten und/oder Fahrassistenzsysteme, die Kategorie Fahrweise Informationen über das momentane Fahrverhalten des Fahrers und die Kategorie Navigation Informationen über unterschiedliche Routen zu einem gewünschten Ziel.

In einer weiteren Ausgestaltung weisen die drei Kategorien jeweils Einstellungen der weiteren Parameter auf, die eine geringe Veränderung des Energievorrats, eine mittelmäßige Veränderung des Energievorrats und eine hohe Veränderung des Energievorrats bewirken. Das zweite Anzeigeelement wird dann in einen ersten Teil und einen zweiten Teil aufgeteilt, wobei die Länge des ersten Teils den Wert der Restreichweite anzeigt und die Länge des zweiten Teils einen Wert anzeigt, um den der Wert der Restreichweite erhöht wird, wenn für die drei Kategorien jeweils die energetisch günstigsten Einstellungen eingestellt werden, die eine geringe Veränderung des Energievorrats bewirken und somit zur höchstmöglichen Restreichweite unter Verwendung von Nebenverbrauchern führen können. Es wird also angezeigt, um welchen Wert sich die Restreichweite erhöht, wenn der Fahrer die energetisch günstigste Einstellung von Nebenverbrauchern trifft, einen ECO Modus zum Fahren wählt und/oder eine energiesparende Route befährt. Dies ist insbesondere dann von Vorteil, wenn ein zu erreichender Zielort knapp außerhalb der Reichweite liegt, die mit dem momentanen Energieverbrauch der weiteren Parameter erreicht werden kann. Der Fahrer kann dann einschätzen, ob ein Verändern seines Fahrverhaltens ausreichend ist, um einen Zielort noch zu erreichen.

Ferner betrifft die Erfindung eine Vorrichtung zum Anzeigen von Fahrzeugparametern, die zumindest einen ersten und einen zweiten Parameter umfassen. Die Vorrichtung umfasst eine Ermittlungseinheit, mittels welcher ein Wert des ersten und ein Wert des zweiten Parameters ermittelbar ist, und eine Anzeigeeinheit, auf der die ermittelten Werte des ersten und des zweiten Parameters anzeigbar sind. Weiterhin umfasst die erfindungsgemäße Vorrichtung eine Umsetzungseinheit, mittels welcher der Wert des ersten Parameters veränderbar ist, wobei die Veränderung des Werts des ersten Parameters in eine Veränderung des Werts des zweiten Parameters umsetzbar ist, und eine Steuereinheit, mittels welcher die Anzeigeeinheit derart ansteuerbar ist, dass ein Anzeigeelement erzeugbar ist, mittels welchem die Umsetzung der Veränderung des Werts des ersten Parameters in die Veränderung des Werts des zweiten Parameters graphisch darstellbar ist.

Erfindungsgemäß weist die Vorrichtung einen Energievorratsspeicher mit einem Energievorrat auf, wobei der Energievorrat der erste Parameter ist. Weiterhin ist die Umsetzungseinheit ein Motor, mittels welchem der Energievorrat in eine zurückgelegte Strecke umsetzbar ist, wobei die zurückgelegte Strecke der zweite Parameter ist. Mittels der Ermittlungseinheit ist aus der Veränderung des Werts des Energievorrats durch die Umsetzung des Energievorrats in die zurückgelegte Strecke eine Restreichweite ermittelbar, wobei die Restreichweite der dritte Parameter ist und der Wert der Restreichweite auf der Anzeigefläche anzeigbar ist.

Erfindungsgemäß ist die Ermittlungseinheit eingerichtet, die Größe des ersten Anteils und die Größe des zweiten Anteils zu ermitteln. Ferner ist die Steuereinheit eingerichtet, die Anzeigeeinheit derart anzusteuern, dass das erste Anzeigeelement als erstes längliches Objekt in einer ersten Position mit einer ersten Länge auf der Anzeigefläche erzeugt wird, in Abhängigkeit von der Größe des zweiten Anteils die erste Länge des ersten länglichen Objekts auf eine zweite Länge verändert wird, eine Markierung angezeigt wird, die Umsetzung der Veränderung des Werts des ersten Parameters in die Veränderung des Werts des zweiten Parameters dadurch dargestellt wird, dass das erste längliche Objekt von der ersten Position in eine zweite Position verschoben wird, wobei die Weite der Verschiebung von der Größe des ersten Anteils abhängig ist, nach der Verschiebung das erste Anzeigeelement von der Markierung in einen ersten Teil und einen zweiten Teil geteilt wird, wobei die Länge des ersten Teils den Wert des ersten Parameters nach der Veränderung des Werts des ersten Parameters darstellt und die Länge des zweiten Teils den Wert des zweiten Parameters nach der Veränderung des Werts des ersten Parameters darstellt, der Wert des dritten Parameters als Länge eines zweiten Anzeigeelements dargestellt wird, welches angrenzend an das erste Anzeigeelement als zweites längliches Objekt mit einem ersten Ende und einem zweiten Ende auf der Anzeigefläche angezeigt wird, die Veränderung des Werts des dritten Parameters aufgrund einer Veränderung des ersten Parameters zu dem ersten Anteil durch eine Längenänderung des zweiten länglichen Objekts am ersten Ende entsprechend der Länge des zweiten Teils des ersten Anzeigeelements dargestellt wird und die Veränderung des Werts des dritten Parameters aufgrund einer Veränderung des ersten Parameters zu dem zweiten Anteil durch eine Längenänderung des zweiten länglichen Objekts am zweiten Ende dargestellt wird.

Die erfindungsgemäße Vorrichtung ist insbesondere zur Ausführung des erfindungsgemäßen Verfahrens geeignet und weist daher alle Vorteile des erfindungsgemäßen Verfahrens auf.

Ferner betrifft die Erfindung ein Elektrofahrzeug mit einer erfindungsgemäßen Vorrichtung.

Im Folgenden wird die Erfindung anhand von Ausführungsbeispielen mit Bezug zu den Zeichnungen erläutert.
- Figur 1: zeigt ein Ausführungsbeispiel der erfindungsgemäßen Vorrichtung in einem Fahrzeug,
- Figur 2: zeigt beispielhaft eine Anzeige auf einer Anzeigeeinheit der erfindungsgemäßen Vorrichtung aus Figur 1,
- Figuren 3a und 3b: zeigen Anzeigen auf der Anzeigeeinheit für ein erstes Ausführungsbeispiel des erfindungsgemäßen Verfahrens,
- Figur 4: zeigt ein Flussdiagramm für das erste Ausführungsbeispiel des erfindungsgemäßen Verfahrens,
- Figuren 5a und 5b: zeigen Anzeigen auf der Anzeigeeinheit für ein zweites Ausführungsbeispiel des erfindungsgemäßen Verfahrens und
- Figur 6: zeigt ein Flussdiagramm für das zweite Ausführungsbeispiel des erfindungsgemäßen Verfahrens.

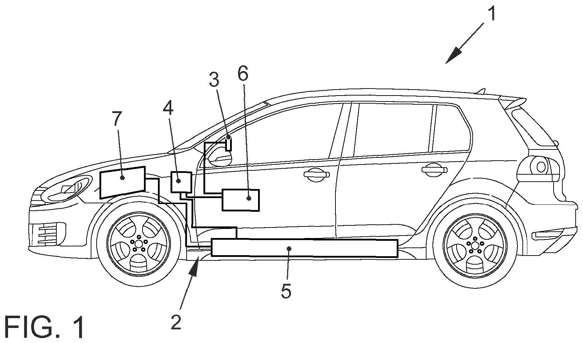

Mit Bezug zu Figur 1 wird ein Ausführungsbeispiel einer erfindungsgemäßen Vorrichtung 2 in einem Fahrzeug 1 erläutert.

Zudem wird der erste Balken 9 von einer Markierung 13 in zwei Teile 9.1 und 9.2 geteilt. Dabei zeigt die Länge des ersten Teils 9.1 den momentanen Wert des Energievorrats, im vorliegenden Beispiel also 100%, an. Eine Strecke wurde mit der Ladung der Batterie 5 noch nicht zurücklegt. Der Wert der zurückgelegten Strecke ist demnach 0 km. Dies wird dadurch angezeigt, dass der zweite Teil 9.2 des ersten Balkens 9 auf der rechten Seite der Markierung 9 nur aus der Pfeilspitze besteht.

Weiterhin wird ein zweites Anzeigeelement 10 angezeigt. Das zweite Anzeigeelement 10 ist ebenfalls als längliches Objekt, insbesondere als Balken, ausgestaltet. Die Gesamtlänge des zweiten Balkens 10 zeigt dabei den Wert der Restreichweite an. Im vorliegenden Beispiel wurde noch keine Energie verbraucht. Die Restreichweite ist demnach noch die maximal mit einer Batterieladung erreichbare Reichweite von 250 km. Der zweite Balken 10 weist ein linkes Ende 16 auf, welches komplementär zu dem rechten Ende des pfeilförmigen Endes des ersten Balkens 9 ausgebildet ist.

Eine Veränderung des Energievorrats kann allgemein in unterschiedliche Parameter umgesetzt werden. Da ein Fahrzeug dem Zwecke der Fortbewegung dient, soll der Energievorrat jedoch hauptsächlich in eine zurückgelegte Strecke umgesetzt werden. Je länger eine Fahrt dabei dauert, desto mehr Energie wird benötigt.

Der Energievorrat wird jedoch nicht allein durch eine Umsetzung von Energie in Streckenkilometer verändert. Vielmehr wirken noch andere Parameter beim Energieverbrauch in einem Fahrzeug mit. Diese Parameter werden vom Fahrverhalten des Fahrers bestimmt. Das Fahrverhalten des Fahrers kann dabei insbesondere in drei Kategorien eingeteilt werden. Die erste Kategorie ist dabei von einem Fahrmodus bestimmt, der wiederum unterschiedliche Konfigurationen für Klimatisierung, Antriebsverhalten und/oder Fahrerassistenzsysteme umfasst. Die zweite Kategorie ist von einer Fahrweise des Fahrers bestimmt, die wiederum vorausschauend, kurzsichtig oder eine Mischung aus beidem sein kann. Die Fahrweise kann insbesondere unterstützend von Fahrerassistenzsystemen beeinflusst werden, die eine vorausschauende Fahrweise begünstigen. Die dritte Kategorie umfasst die Navigation. Dies bedeutet, dass der Energieverbrauch abhängig von der befahrenen Strecke ist. Der Energieverbrauch auf einer Strecke mit einem sehr unterschiedlichen Höhenprofil oder vielen Kurven ist dabei wesentlich höher als auf einer ebenen Route mit wenig Kurven.

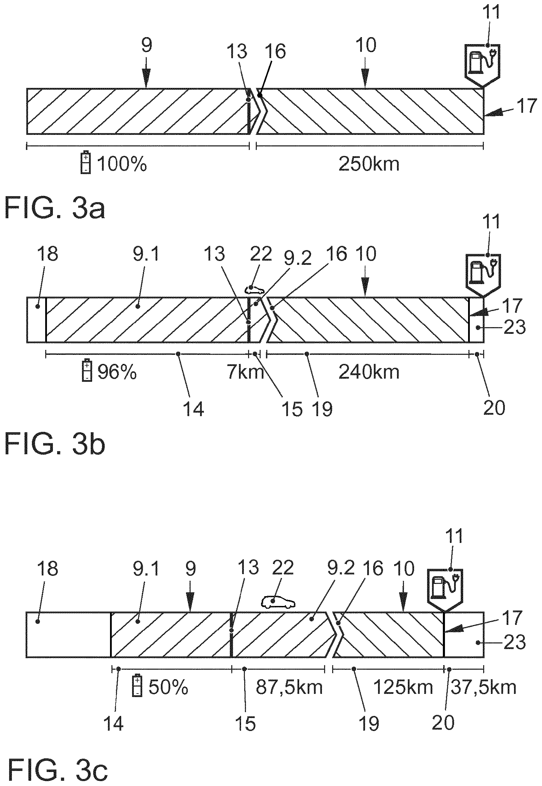

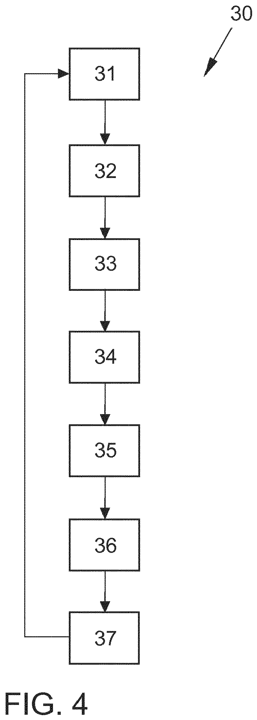

Mit Bezug zu den Figuren 3a, 3b, 3c und 4 wird ein erstes Ausführungsbeispiel des erfindungsgemäßen Verfahrens erläutert. Dabei soll nur der Ausschnitt der Anzeigefläche 8 erläutert werden, in dem der erste Balken 9 und der zweite Balken 10 angeordnet ist.

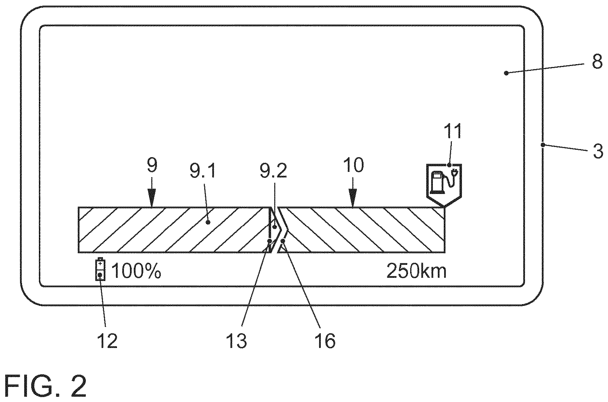

Ausgangssituation ist wie mit Bezug zu Figur 2 beschrieben. Die Ausgangsanzeige ist dabei in Figur 3a im Detail gezeigt:
In Schritt 31 werden zunächst der Wert des Energievorrats, der Wert der zurückgelegten Strecke und der Wert der mit dem vorhandenen Energievorrat erreichbaren Restreichweite ermittelt. Im vorliegenden Fall wurde die Batterie 5 neu auf einen Ladezustand von 100% geladen. Die Ermittlungseinheit 4 ermittelt also einen Wert des Energievorrats von 100%, einen Wert der zurückgelegten Strecke von 0 km und einen Wert der Restreichweite von 250 km, welche der maximalen mit einer vollen Batterie 5 erreichbaren Reichweite entspricht.

In Schritt 32 wird daraufhin eine Anzeige, wie sie in Figur 3a gezeigt ist, auf der Anzeigefläche 8 der Anzeigeeinheit 3 erzeugt. Diese Anzeige entspricht der bereits mit Bezug zu Figur 2 erläuterten Anzeige.

In Schritt 33 schaltet der Fahrer den Motor 7 des Elektrofahrzeugs 1 an und tritt mit seinem Fuß auf das Gaspedal. Dadurch wird der Energievorrat verändert. Weiterhin setzt sich das Elektrofahrzeug 1 in Bewegung und legt Strecke zurück.

In Schritt 34 wird ermittelt, wie groß der erste Anteil der Veränderung des Energievorrats ist, der in eine zurückgelegte Strecke umgesetzt wird. Dieser erste Anteil beträgt beispielsweise 70%. Nach einer Veränderung des Energievorrats um 4% hätte das Elektrofahrzeug 1 bei einer 100%-igen Umsetzung von Energie in Strecke bei einer maximalen Reichweite von 250 km eine Strecke von 10 km zurücklegen müssen. Es werden jedoch lediglich 2,8% der 4%-igen Veränderung in zurückgelegte Strecke umgesetzt. In Wirklichkeit hat das Elektrofahrzeug 1 daher nur eine Strecke von 7 km zurückgelegt.

In Schritt 35 wird ermittelt, wie groß der zweite Anteil der Veränderung des Energievorrats ist, der in weitere Parameter abgeht. Dies geht jedoch einher mit der Ermittlung des ersten Anteils, so dass im ersten Ausführungsbeispiels des erfindungsgemäßen Verfahrens der zweite Anteil rein rechnerisch ermittelt werden kann. Beträgt also der erste Anteil 70%, muss der zweite Anteil 30% betragen.

Zur Darstellung dieser Situation, wird in Schritt 36 die Anzeigefläche 8 derart angesteuert, dass der erste Balken 9, der sich in einer ersten Position befindet, nach einer 4%-igen Veränderung des Energievorrats von der ersten Position in eine zweite Position verschoben wird. Die Markierung 13 bleibt dabei ortsfest. Der zweite Teil 9.2 des ersten Balkens 9 wird dadurch verlängert. Die Länge 15 des zweiten Teils 9.2 des ersten Balkens 9 stellt dabei die Länge der zurückgelegten Strecke, im vorliegenden Beispiel also 7 km, und gleichzeitig die Weite der Verschiebung des ersten Balkens 9 dar.

Die Länge 14 des ersten Teils 9.1 des ersten Balkens 9 wird durch die beiden Anteile an der Veränderung des Energievorrats bestimmt. Zunächst wird der erste Teil 9.1 also um die Weite der Verschiebung des gesamten ersten Balkens 9 verkürzt. Zusätzlich wird der erste Teil 9.1 des ersten Balkens 9 durch eine Veränderung des Energievorrats aufgrund weiterer Parameter verkürzt dargestellt. Um den Fahrer die gesamte Veränderung des Werts des Energievorrats darzustellen, wird ein Feld 18 angezeigt, dessen Länge dem Wert der Gesamtveränderung des Energievorrats entspricht. Dieses Feld 18 erstreckt sich von dem ursprünglichen linken Ende des ersten Balkens 9 zum momentanen linken Ende des ersten Balkens 9.

Weiterhin wird ein Symbol 22 angezeigt, welches einem Fahrzeug gleicht, und zwar oberhalb des zweiten Teils 9.2 des ersten Balkens. Dadurch wird dem Fahrer symbolisiert, dass der zweite Teil 9.2 des ersten Balkens eine zurückgelegte Strecke anzeigt.

In Schritt 37, der bevorzugt gleichzeitig zu Schritt 36 ausgeführt wird, wird der zweite Balken 10 auf der Anzeigefläche 8 verändert. Die erste Seite 16, welche dem zweiten Teil 9.1 des ersten Balkens 9 zugewandt ist, wird entsprechend der Weite der Verschiebung des ersten Balkens 9, also entsprechend der Länge des zweiten Teils 9.2 des ersten Balkens 9, verkürzt. Dadurch wird dem Fahrer deutlich visualisiert, dass die zurückgelegte Strecke direkt von der Restreichweite abgeht. Auf der dem ersten Balken 9 abgewandten Seite 17 des zweiten Balkens 10 wird der zweite Balken 10 um den zweiten Anteil der Veränderung des Werts des Energievorrats verkürzt. Um dem Fahrer dies zu verdeutlichen, wird ein Feld 23, das die Verkürzung der Länge 19 des zweiten Balkens 10 um den zweiten Anteil der Veränderung des Werts des Energievorrats in einer anderen Farbe als der zweite Balken 10 angezeigt. Die neue Länge 19 des zweiten Balkens 10 zeigt die momentane Restreichweite von 240 km an. Auch das Ladesymbol 11 wird bei dem zweiten Ende 17 des zweiten Balkens 10 angezeigt, um den Fahrer zu verdeutlichen, dass er spätestens dann die Batterie wieder aufladen muss.

Nach Schritt 37 fängt das erfindungsgemäße Verfahren 30 wieder von Neuem an. Bei dem erfindungsgemäßen Verfahren 30 handelt es sich um ein Verfahren, dass ständig wiederholt wird. Durch den Vorgang des Fahrzeugbetriebs wird der Energievorrat, die zurückgelegte Strecke und die Restreichweite ständig verändert. Die beiden Balken 9 und 10 werden demnach in einer fließenden Animation verändert. Der erste Balken 9 verschiebt sich dabei kontinuierlich durch jeden zurückgelegten Streckenkilometer. Entsprechend der zurückgelegten Fahrstrecke verändert sich auch die Restreichweite kontinuierlich, wodurch eine ständige Anpassung des zweiten Balkens 10 notwendig ist. Gleiches gilt für die Veränderung des Werts des Energievorrats um den zweiten Anteil, der durch weitere Parameter bestimmt wird.

In Figur 3c wird beispielhaft eine Situation dargestellt, bei welcher der Energievorrat bereits um insgesamt 50% abgenommen hat. Dabei sind 70% in zurückgelegte Strecke umgesetzt worden, was einer Kilometeranzahl von 87,5 km entspricht. Entsprechend zu der 50%-igen Abnahme des Energievorrats wird auch die Restreichweite durch die Länge 19 des zweiten Balkens nur noch mit 125 km angegeben. Die fehlenden 37,5 km Restreichweite, welche durch die Länge 20 des Feldes 23 angegeben ist, wurden durch den Energieverbrauch durch weitere Parameter verloren.

Bei den gezeigten Figuren handelt es sich um Momentaufnahmen. Die Werte des Energievorrats und der zurückgelegten Strecke werden kontinuierlich ermittelt. Aus dem Wert des Ladezustandes wird daher auch kontinuierlich der Wert der Restreichweite bestimmt. Die Verschiebung der Balken 9 und 10 wird daher in einer Animation dargestellt, bei der sich die Längen 14 und 19 der Balken 9 und 10 ständig verändern. Ebenso sind auch der erste und zweite Anteil der Veränderung des Werts des Energievorrats keine über die Dauer der Fahrt festgeschriebenen Werte. Diese hängen stark von der Fahrweise und von den verwendeten Nebenverbrauchern ab.

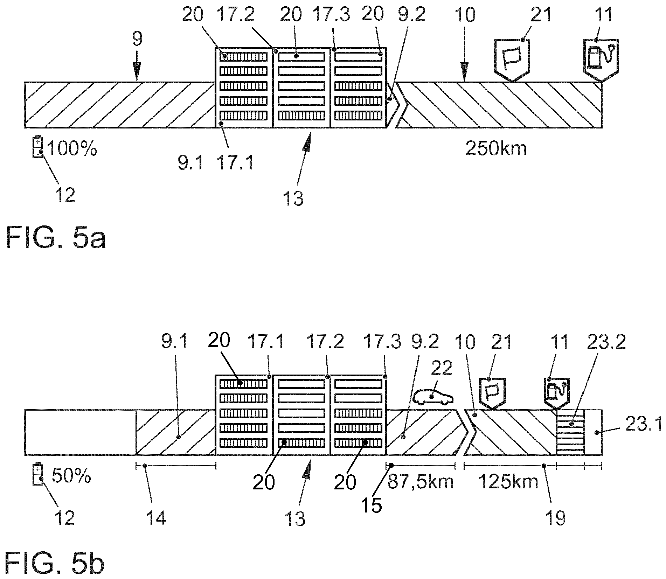

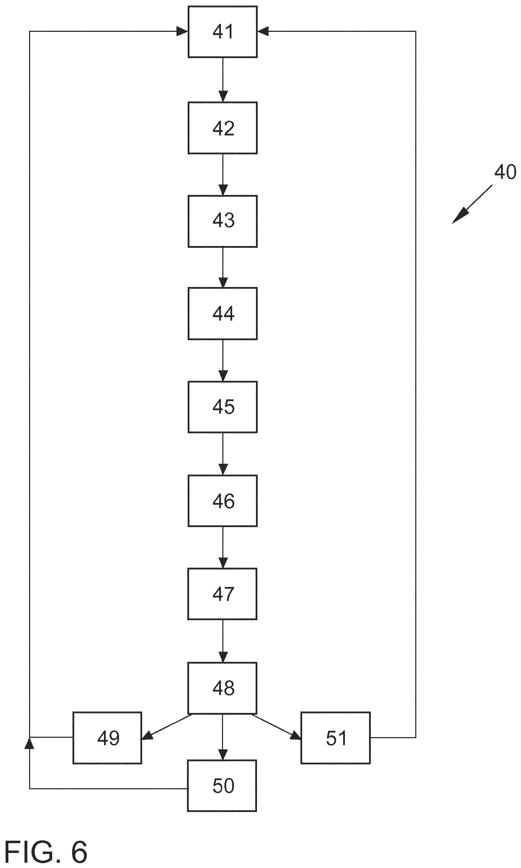

Mit Bezug zu den Figuren 5a, 5b und 6 wird ein zweites Ausführungsbeispiel des erfindungsgemäßen Verfahrens erläutert. Dabei werden insbesondere die weiteren Parameter im Verfahren detaillierter berücksichtigt:
Schritt 41 entspricht dabei Schritt 31 des Verfahrens 30. Ausgangspunkt ist also wieder eine vollaufgeladene Batterie 5 mit einem Wert des Energievorrats von 100%, einem Wert an zurückgelegter Strecke von 0 km und einer maximalen Reichweite von 250 km.

In Schritt 42 des Verfahrens 40 wird der Einfluss jeder einzelnen Kategorie auf die Veränderung des Energievorrats ermittelt. Dabei werden die zu Beginn des Verfahrens 40 eingestellten Einstellungen der einzelnen Kategorien verwendet.

In Schritt 43 wird auf der Anzeigefläche 8 eine Anzeige erzeugt, wie sie in Figur 5a gezeigt ist. Neben den beiden Anzeigeelementen 9 und 10 werden graphische Elemente 17.1 bis 17.3 auf der Anzeigefläche 8 erzeugt. Das graphische Element 17.1 stellt dabei die Kategorie Fahrmodus, das graphische Element 17.2 die Kategorie Fahrweise und das graphische Element 17.3 die Kategorie Navigation dar.

Die graphischen Elemente 17.1 bis 17.3 ersetzen dabei die Markierung 13 des Verfahrens 30. Die Markierung 13 hat nun eine Ausdehnung, die sich über die graphischen Elemente 17.1 bis 17.3 erstreckt. Der zweite Teil 9.2 des ersten Balkens 9 ist zu Anfang des Verfahrens 40 als Pfeilspitze neben dem graphischen Elemente 17.3 dargestellt.

Die graphischen Elemente 17.1 bis 17.3 weisen Indikatorelemente 20 auf, welche anzeigen, wie groß der Einfluss der Kategorie auf den Energievorrat ist. Dies wird insbesondere über eine Einfärbung der Indikatorelemente 20 erreicht. Im vorliegenden Beispiel weist jedes graphische Element 17.1 bis 17.3 fünf Indikatorelemente 20 auf. Im ersten graphischen Element 17.1, welches die Kategorie Fahrmodus darstellt, sind fünf Indikatorelemente 20 eingefärbt. Dies weist auf einen hohen Energieverbrauch durch die Kategorie Fahrmodus hin. Dem Fahrer wird dadurch ein Hinweis darauf gegeben, dass, wenn er den Energieverbrauch reduzieren und somit die Restreichweite erhöhen möchte, er die Einstellungen für die Kategorie Fahrmodus prüfen sollte. Das zweite graphische Element 17.2 weist lediglich ein eingefärbtes Indikatorelement 20 auf. Die Kategorie Fahrweise verbraucht wenig Energie. Ein Ändern der Fahrweise würde dem Fahrer beim Energiesparen und somit beim Erhöhen der Restreichweite nicht helfen. Das dritte graphische Element 17.3 weist drei eingefärbte Indikatorelemente 20 auf. Die Kategorie Navigation hat einen mittelmäßigen Einfluss auf die Veränderung des Energievorrats und somit auch einen geringen Einfluss auf die Restreichweite. Um Energie zu sparen und die Restreichweite zu erhöhen kann eine Änderung der Route in Erwägung gezogen werden.

Schritt 44 entspricht Schritt 33 des Verfahrens 30. Der Energievorrat wird verändert.

In Schritt 45 wird, wie in Schritt 34 des Verfahrens 30, ermittelt, wie groß der erste Anteil ist, der von der Veränderung des Energievorrats in die Umsetzung der Veränderung der zurückgelegten Strecke abgeht. Wie im Verfahren 30 wurde der erste Anteil zu 70% und der zweite Anteil zu 30% ermittelt.

In Schritt 46 wird nun die Anzeigefläche 8 derart angesteuert, dass sich eine Anzeige ergibt, wie sie in Figur 5b gezeigt ist. Dabei handelt es sich bei der Anzeige lediglich um eine Momentaufnahme, da das Verfahren dazu führt, dass sich die Anzeige ständig verändert.

Nach einer Gesamtabnahme des Energievorrats um 50% wurden 35% der 50%-igen Energieabnahme in zurückgelegte Strecke umgesetzt und 15% der 50%-igen Energieabnahme wurden von den in drei Kategorien eingeteilte weitere Parameter umgesetzt. Der erste Balken 9 wird derart verschoben, dass die Länge 15 des zweiten Teils 9.2 nun den Wert 87,5 km repräsentiert.

Die Länge 14 des ersten Teils 9.1 des ersten Balkens 9 wird demnach derart verkürzt, dass der erste Balken 9 nur noch halb so lang ist wie anfänglich bei 100%-iger Ladung der Batterie 5. Die Ausdehnung der graphischen Elemente 17.1 bis 17.3, welche die Markierung 13 darstellen, bedingt, dass die Animation der Verschiebung den Anschein hat, als würde sich der erste Balken 9 hinter den graphischen Elementen 17.1 bis 17.3 vorbei schieben.

In Schritt 47 wird der Einfluss jeder einzelnen Kategorie weiterer Parameter auf die Restreichweite ermittelt. Der zweite Balken 10 wird in einen ersten Teil 10.1 und eine zweiten Teil 10.2 geteilt. Dabei zeigt die Länge des zweiten Teils 10.2 an, um welchen Wert sich die Restreichweite erhöhen würde, wenn der Fahrer in allen drei Kategorien die energieärmsten Einstellungen treffen würde. Dies wird allgemein auch als Potential bezeichnet. Die Länge des Feldes 23 zeigt wiederum an, um welchen Wert sich die Restreichweite unwiderruflich durch Energieverbrauch durch die weiteren Parameter verkürzt hat.

In Schritt 48 wird dann die Entfernung eines in ein Navigationsgerät eingegebenen Zielorts ermittelt. Je nach ermittelter Entfernung fährt das Verfahren dann mit dem Schritt 49, 50 oder 51 fort.

Liegt der Zielort nicht mehr innerhalb der Reichweite, wird in Schritt 49 eine Zielfahne 21 rechts von dem Ladesymbol 11, jedoch innerhalb des Bereichs des zweiten Teils 10.2 des zweiten Balken 10 angezeigt. Dies bedeutet, der Zielort ist bei einer Änderung des Fahrverhaltens, also einer Änderung der Einstellungen der weiteren Parameter der drei Kategorien, erreichbar. Dem Fahrer werden konkrete Vorschläge zur Reduzierung des Energieverbrauchs angezeigt. Beispielsweise wird dem Fahrer vorgeschlagen eine Gebläsestärke zu reduzieren oder das Elektrofahrzeug 1 in einem energiesparenden ECO-Modus weiter zu betreiben.

Liegt die Zielfahne 21 jedoch innerhalb des Bereichs 23 wird dem Fahrer im Schritt 50 eine Warnung ausgegeben. Diese teilt dem Fahrer mit, dass der Zielort ohne eine Aufladen der Batterie 5 nicht mehr zu erreichen ist.

Liegt der Zielort innerhalb der noch erreichbaren Restreichweite, wird die Zielfahne 21 im Schritt 51 links vom Ladesymbol 11 angezeigt, wie es in Figur 5b gezeigt ist. Es werden keine Hinweise ausgegeben.

Nach den Schritten 49, 50 oder 51 wird das Verfahren 40 von Neuem begonnen.

Die Figuren 5a und 5b zeigen ebenso Momentaufnahmen, die beispielhaft die Anzeige auf der Anzeigefläche bei einem Energievorrat von 100% bzw. 50% anzeigt.

Alternativ können die Indikatorelemente 20 auch unterschiedliche Konfigurationen der Kategorien bedeuten. Dies bedeutet für die Fahrweise beispielsweise voreingestellte Konfigurationen der Klimaanlage und/oder Lautstärke für das Radio. Diese können beispielsweise vom Fahrer selbst konfiguriert und abgespeichert werden. So können dann die Indikatorelemente 20 innerhalb einer Kategorie eine unterschiedliche Farbe aufweisen, wobei dann eine grüne Einfärbung "energiearm", eine orange Einfärbung "mittelmäßig" und eine rote Einfärbung "energieintensiv" bedeutet. Über ein Bedienelement kann der Fahrer dann die von ihm gewünschte Konfiguration aussuchen, wobei die eingestellte Konfiguration dann von dem Indikatorelement 20 angezeigt wird, welches an unterster Stelle des jeweiligen graphischen Elements 17.1 bis 17.3 angeordnet ist. So wird dem Fahrer ständig vergegenwärtigt, dass er durch ein Umstellen der Konfiguration Energie einsparen und somit die Restreichweite erhöhen könnte. Gleiches gilt für die Fahrweise und die Navigation.

Für den Fall, dass der Fahrer keine Eingaben in ein Navigationsgerät getätigt hat, kann das graphische Element 17.3, das die Navigation repräsentiert, ausgegraut, also inaktiv, dargestellt werden. Alternativ können auch dann lediglich zwei graphische Elemente 17.1 und 17.2 dargestellt werden.

Die verschiedenen Schritte der Verfahren 30 und 40 können ohne Weiteres variiert und miteinander kombiniert werden.

### Bezugszeichenliste

- 1: Fahrzeug
- 2: Vorrichtung
- 3: Anzeigeeinheit
- 4: Ermittlungseinheit
- 5: Batterie; Energievorratsspeicher
- 6: Steuereinheit
- 7: Umsetzungseinheit
- 8: Anzeigefläche
- 9: erstes Anzeigeelement
- 9.1, 9.2: erstes bzw. zweites Teil des ersten Anzeigeelements
- 10: zweites Anzeigeelement
- 10.1, 10.2: erstes bzw. zweites Teil des zweiten Anzeigeelements
- 11: Tankstellensymbol
- 12: Batteriesymbol
- 13: Markierung
- 14: Länge erster Teil erstes Anzeigeelement
- 15: Länge zweiter Teil erstes Anzeigeelement
- 16: erstes Ende des zweiten Anzeigeelements
- 17: zweites Ende des zweiten Anzeigeelements
- 18: Feld
- 19: Länge erster Teil zweites Anzeigeelement
- 20: Länge zweiter Teil zweites Anzeigeelement
- 21: Zielfahne
- 22: Symbol für zurückgelegte Strecke
- 23: Feld
- 30,40: Verfahren
- 31-37: Verfahrensschritte
- 41-51: Verfahrensschritte

## Patentansprüche

1. Verfahren zum Anzeigen von Fahrzeugparametern, die zumindest einen ersten und einen zweiten Parameter umfassen, bei dem
- ein Wert des ersten und ein Wert des zweiten Parameters ermittelt wird,
- der Wert des ersten und der Wert des zweiten Parameters auf einer Anzeigefläche (8) angezeigt werden,
- der Wert des ersten Parameters verändert wird, wobei die Veränderung des Werts des ersten Parameters zumindest zu einem ersten Anteil in eine Veränderung des Werts des zweiten Parameters umgesetzt wird,
- der Wert eines dritten Parameters ermittelt wird, wobei eine Veränderung des Werts des dritten Parameters von der Veränderung des Werts des ersten Parameters abhängig ist, und der Wert des dritten Parameters auf der Anzeigefläche (8) angezeigt wird, und
- auf der Anzeigefläche (8) ein erstes Anzeigeelement (9) erzeugt wird, mittels welchem die Umsetzung der Veränderung des Werts des ersten Parameters in die Veränderung des Werts des zweiten Parameters graphisch dargestellt wird, wobei der erste Parameter ein Energievorrat, der zweite Parameter eine zurückgelegte Strecke und der dritte Parameter eine Restreichweite ist, und
- wobei die Veränderung des ersten Parameters zu einem zweiten Anteil von weiteren Parametern abhängt,
**dadurch gekennzeichnet, dass**
- die Größe des ersten Anteils und die Größe des zweiten Anteils ermittelt werden,
- das erste Anzeigeelement (9) als erstes längliches Objekt in einer ersten Position mit einer ersten Länge auf der Anzeigefläche (8) erzeugt wird,
- in Abhängigkeit von der Größe des zweiten Anteils die erste Länge des ersten länglichen Objekts (9) auf eine zweite Länge verändert wird,
- eine Markierung (13) angezeigt wird,
- die Umsetzung der Veränderung des Werts des ersten Parameters in die Veränderung des Werts des zweiten Parameters dadurch dargestellt wird, dass das erste längliche Objekt (9) von der ersten Position in eine zweite Position verschoben wird, wobei die Weite (15) der Verschiebung von der Größe des ersten Anteils abhängig ist,
- nach der Verschiebung das erste Anzeigeelement (9) von der Markierung (13) in einen ersten Teil (9.1) und einen zweiten Teil (9.2) geteilt wird, wobei die Länge (14) des ersten Teils (9.1) den Wert des ersten Parameters nach der Veränderung des Werts des ersten Parameters darstellt und die Länge (15) des zweiten Teils den Wert des zweiten Parameters nach der Veränderung des Werts des ersten Parameters darstellt,
- der Wert des dritten Parameters als Länge (19) eines zweiten Anzeigeelements (10) dargestellt wird, welches angrenzend an das erste Anzeigeelement (9) als zweites längliches Objekt mit einem ersten Ende (16) und einem zweiten Ende (17) auf der Anzeigefläche (8) angezeigt wird,
- die Veränderung des Werts des dritten Parameters aufgrund einer Veränderung des ersten Parameters zu dem ersten Anteil durch eine Längenänderung des zweiten länglichen Objekts (10) am ersten Ende (16) entsprechend der Länge des zweiten Teils (9.2) des ersten Anzeigeelements (9) dargestellt wird und
- die Veränderung des Werts des dritten Parameters aufgrund einer Veränderung des ersten Parameters zu dem zweiten Anteil durch eine Längenänderung des zweiten länglichen Objekts (10) am zweiten Ende (17) dargestellt wird.

2. Verfahren nach Anspruch 1
**dadurch gekennzeichnet, dass**
- die weiteren Parameter in Kategorien zusammengefasst werden,
- der Einfluss jeder Kategorie von weiteren Parametern auf den Energievorrat ermittelt wird, und
- für jede Kategorie von weiteren Parametern ein graphisches Element (17.1, 17.2, 17.3) auf der Anzeigefläche (8) erzeugt wird, welches den Einfluss der weiteren Parameter auf den Energievorrat anzeigt.

3. Verfahren nach Anspruch 2,
**dadurch gekennzeichnet, dass**
die graphischen Elemente (17.1, 17.2, 17.3) für die unterschiedlichen Kategorien die Markierung (13) darstellen, die das erste Anzeigeelement (9) in den ersten Teil (9.1) und den zweiten Teil (9.2) teilt, wobei die graphischen Elemente (17.1, 17.2, 17.3) zumindest zwei Indikatorelemente (20) umfassen, von denen zumindest eines hervorgehoben dargestellt wird, wobei die Anzahl der hervorgehoben dargestellten Indikatorelemente (20) und/oder die Art der Hervorhebung der Indikatorelemente (20) die Größe des Einflusses der Kategorie der weiteren Parameter auf den ersten Parameter anzeigen/anzeigt.

4. Verfahren nach einem der Ansprüche 1, 2 oder 3,
**dadurch gekennzeichnet, dass**
die weiteren Parameter in drei Kategorien aufgeteilt werden, wobei eine erste Kategorie ein Fahrmodus, eine zweite Kategorie eine Fahrweise und/oder eine dritte Kategorie eine Navigation ist, wobei die Kategorie Fahrmodus Konfigurationen für Klimatisierung, Antriebsverhalten und/oder Fahrassistenzsysteme umfasst, die Kategorie Fahrweise Informationen über das momentane Fahrverhalten des Fahrers umfasst und die Kategorie Navigation Informationen über unterschiedliche Routen zu einem gewünschten Ziel umfassen.

5. Verfahren nach Anspruch 4,
**dadurch gekennzeichnet, dass**
- die drei Kategorien jeweils Einstellungen der weiteren Parameter aufweisen, die eine geringe Veränderung des Energievorrats, eine mittelmäßige Veränderung des Energievorrats und eine hohe Veränderung des Energievorrats bewirken, und
- das zweite Anzeigeelement (10) in einen ersten Teil und einen zweiten Teil aufgeteilt wird, wobei die Länge des ersten Teils den Wert der Restreichweite anzeigt und die Länge des zweiten Teils einen Wert anzeigt, um den der Wert der Restreichweite erhöht wird, wenn für die drei Kategorien jeweils die Einstellungen eingestellt werden, die eine geringe Veränderung des Energievorrats bewirken.

6. Vorrichtung (2) zum Anzeigen von Fahrzeugparametern, die zumindest einen ersten und einen zweiten Parameter umfassen, mit
- einer Ermittlungseinheit (4), mittels welcher ein Wert des ersten Parameters und ein Wert des zweiten Parameters ermittelbar sind,
- einer Anzeigeeinheit (3) mit einer Anzeigefläche (8), auf der die ermittelten Werte des ersten Parameters und des zweiten Parameters anzeigbar sind,
- einer Umsetzungseinheit (7), mittels welcher der Wert des ersten Parameters veränderbar ist, wobei die Veränderung des Werts des ersten Parameters in eine Veränderung des Werts des zweiten Parameters umsetzbar ist, und
- einer Steuereinheit (6), mittels welcher die Anzeigeeinheit (3) derart ansteuerbar ist, dass ein erstes Anzeigeelement (9) erzeugbar ist, mittels welchem die Umsetzung der Veränderung des Werts des ersten Parameters in die Veränderung des Werts des zweiten Parameters graphisch darstellbar ist,
- einem Energievorratsspeicher (5), der einen Energievorrat aufweist, wobei der Energievorrat der erste Parameter ist,
- wobei die Umsetzungseinheit (7) ein Motor ist, mittels welchem der Energievorrat in eine zurückgelegte Strecke umsetzbar ist, wobei die zurückgelegte Strecke der zweite Parameter ist, und
- wobei mittels der Ermittlungseinheit (4) aus der Veränderung des Werts des Energievorrats durch die Umsetzung des Energievorrats in die zurückgelegte Strecke eine Restreichweite ermittelbar ist, wobei die Restreichweite der dritte Parameter ist und der Wert der Restreichweite auf der Anzeigefläche anzeigbar ist.
**dadurch gekennzeichnet, dass**
- die Ermittlungseinheit (4) eingerichtet ist, die Größe des ersten Anteils und die Größe des zweiten Anteils zu ermitteln,
- die Steuereinheit (6) eingerichtet ist, die Anzeigeeinheit (3) derart anzusteuern, dass das erste Anzeigeelement (9) als erstes längliches Objekt in einer ersten Position mit einer ersten Länge auf der Anzeigefläche (8) erzeugt wird,
- in Abhängigkeit von der Größe des zweiten Anteils die erste Länge des ersten länglichen Objekts (9) auf eine zweite Länge verändert wird,
- eine Markierung (13) angezeigt wird,
- die Umsetzung der Veränderung des Werts des ersten Parameters in die Veränderung des Werts des zweiten Parameters dadurch dargestellt wird, dass das erste längliche Objekt (9) von der ersten Position in eine zweite Position verschoben wird, wobei die Weite (15) der Verschiebung von der Größe des ersten Anteils abhängig ist,
- nach der Verschiebung das erste Anzeigeelement (9) von der Markierung (13) in einen ersten Teil (9.1) und einen zweiten Teil (9.2) geteilt wird, wobei die Länge (14) des ersten Teils (9.1) den Wert des ersten Parameters nach der Veränderung des Werts des ersten Parameters darstellt und die Länge (15) des zweiten Teils den Wert des zweiten Parameters nach der Veränderung des Werts des ersten Parameters darstellt,
- der Wert des dritten Parameters als Länge (19) eines zweiten Anzeigeelements (10) dargestellt wird, welches angrenzend an das erste Anzeigeelement (9) als zweites längliches Objekt mit einem ersten Ende (16) und einem zweiten Ende (17) auf der Anzeigefläche (8) angezeigt wird,
- die Veränderung des Werts des dritten Parameters aufgrund einer Veränderung des ersten Parameters zu dem ersten Anteil durch eine Längenänderung des zweiten länglichen Objekts (10) am ersten Ende (16) entsprechend der Länge des zweiten Teils (9.2) des ersten Anzeigeelements (9) dargestellt wird und
- die Veränderung des Werts des dritten Parameters aufgrund einer Veränderung des ersten Parameters zu dem zweiten Anteil durch eine Längenänderung des zweiten länglichen Objekts (10) am zweiten Ende (17) dargestellt wird.

7. Elektrofahrzeug (1) mit einer Vorrichtung (2) nach Anspruch 6 .

## Claims

1. Method for displaying vehicle parameters which comprise at least a first and a second parameter, in which
- a value of the first parameter and a value of the second parameter are determined,
- the value of the first parameter and the value of the second parameter are displayed on a display area (8),
- the value of the first parameter is changed, wherein the change in the value of the first parameter is converted, at least to a certain extent, into a change in the volume of the second parameter,
- the value of a third parameter is determined, wherein a change in the value of the third parameter depends on the change in the value of the first parameter, and the value of the third parameter is displayed on the display area (8), and
- a first display element (9) is generated on the display area (8) and is used to represent graphically the conversion of the change in the value of the first parameter into the change in the value of the second parameter, wherein the first parameter is an energy supply, the second parameter is a distance travelled and the third parameter is a remaining range, and
- wherein the change in the first parameter depends to a second extent on further parameters,
**characterized in that**
- the size of the first extent and the size of the second extent are determined,
- the first display element (9) is generated as a first elongate object in a first position with a first length on the display area (8),
- the first length of the first elongate object (9) is changed to a second length in accordance with the size of the second extent,
- a mark (13) is displayed,
- the conversion of the change in the value of the first parameter into the change in the value of the second parameter is represented by virtue of the fact that the first elongate object (9) is shifted from the first position into a second position, wherein the width (15) of the shift is dependent on the size of the first extent,
- after the shifting the first display element (9) is divided by the mark (13) into a first part (9.1) and a second part (9.2), wherein the length (14) of the first part (9.1) represents the value of the first parameter after the change in the value of the first parameter, and the length (15) of the second part represents the value of the second parameter after the change in the value of the first parameter,
- the value of the third parameter is represented as a length (19) of a second display element (10) which is displayed adjacent to the first display element (9) as a second elongate object with a first end (16) and a second end (17) on the display area (8),
- the change in the value of the third parameter owing to a change in the first parameter by the first extent is represented by a change in length of the second elongate object (10) at the first end (16) corresponding to the length of the second part (9.2) of the first display element (9), and
- the change in the value of the third parameter owing to a change in the first parameter by the second extent is represented by a change in length of the second elongate object (10) at the second end (17).

2. Method according to Claim 1,
**characterized in that**
- the further parameters are combined in categories,
- the influence of each category of further parameters on the energy supply is determined, and
- for each category of further parameters a graphic element (17.1, 17.2, 17.3) which indicates the influence of the further parameters on the energy supply is generated on the display area (8).

3. Method according to Claim 2,
**characterized in that**
the graphic elements (17.1, 17.2, 17.3) represent, for the different categories, the mark (13) which divides the first display element (9) into the first part (9.1) and the second part (9.2), wherein the graphic elements (17.1, 17.2, 17.3) comprise at least two indicator elements (20), at least one of which is highlighted, wherein the number of highlighted displayed indicator elements (20) and/or the type of highlighting of the indicator elements (20) display(s) the magnitude of the influence of the category of the further parameters on the first parameter.

4. Method according to one of Claims 1, 2 or 3, **characterized in that**
the further parameters are divided into three categories, wherein a first category is a driving mode, a second category is a driving style and/or a third category is a navigation, wherein the driving mode category comprises configurations of air conditioning, drive behaviour and/or driving assistance systems, the driving style category comprises information about the instantaneous driving behaviour of the driver, and the navigation category comprises information about different routes to a desired destination.

5. Method according to Claim 4,
**characterized in that**
- the three categories each comprise settings of the further parameters which bring about a small change in the energy supply, a middle change in the energy supply and a large change in the energy supply, and
- the second display element (10) is divided into a first part and a second part, wherein the length of the first part indicates the value of the remaining range, and the length of the second part indicates a value by which the value of the remaining range is increased if the settings which bring about a small change in the energy supply are respectively set for the three categories.

6. Device (2) for displaying vehicle parameters which comprise at least a first parameter and a second parameter having
- a determining unit (4) by means of which a value of the first parameter and a value of the second parameter can be determined,
- a display unit (3) with a display area (8) on which the determined values of the first parameter and of the second parameter can be displayed,
- an conversion unit (7) by means of which the value of the first parameter can be changed, wherein the change in the value of the first parameter can be converted into a change in the value of the second parameter, and
- a control unit (6) by means of which the display unit (3) that it is possible to generate a first display element (9) by means of which the conversion of the change in the value of the first parameter into the change in the value of the second parameter can be represented graphically,
- an energy supply store (5) which has an energy supply, wherein the energy supply is the first parameter,
- wherein the conversion unit (7) is a motor by means of which the energy supply can be converted into a distance travelled, wherein the distance travelled is the second parameter, and
- wherein a remaining range can be determined from the change in the value of the energy supply by means of the determining unit (4) by converting the energy supply into the distance travelled, wherein the residual range is the third parameter, and the value of the residual range can be displayed on the display area,
**characterized in that**
- the determining unit (4) is configured to determine the magnitude of the first extent and the magnitude of the second extent,
- the control unit (6) is configured to actuate the display unit (3) in such a way that the first display element (9) is generated as the first elongate object in a first position with a first length on the display area (8),
- the first length of the first elongate object (9) is changed to a second length as a function of the magnitude of the second extent,
- a mark (13) is displayed,
- the conversion of the change in the value of the first parameter into the change of the value in the second parameter is represented by virtue of the fact that the first elongate object (9) is shifted from the first position into a second position, wherein the width (15) of the shift is dependent on the magnitude of the first extent,
- after the shifting the first display element (9) is divided by the mark (13) into a first part (9.1) and a second part (9.2), wherein the length (14) of the first part (9.1) represents the value of the first parameter after the change in the value of the first parameter, and the length (15) of the second part represents the value of the second parameter after the change in the value of the first parameter,
- the value of a third parameter is represented as a length (19) of a second display element (10) which is displayed adjacent to the first display element (9) as a second elongate object with a first end (16) and a second end (17) on the display area (8),
- the change in the value of the third parameter owing to a change in the first parameter by the first extent is represented by a change in length of the second elongate object (10) at the first end (16) corresponding to the length of the second part (9.2) of the first display element (9), and
- the change in the value of the third parameter owing to a change in the first parameter by the second extent is represented by a change in length of the second elongate object (10) at the second end (17).

7. Electric vehicle (1) having a device (2) according to Claim 6.

## Revendications

1. Procédé d'affichage de paramètres de véhicule qui comprennent au moins un premier et un deuxième paramètre, dans lequel
- une valeur du premier et une valeur du deuxième paramètre sont déterminées,
- la valeur du premier et la valeur du deuxième paramètre sont affichées sur une surface d'affichage (8),
- la valeur du premier paramètre est modifiée, la modification de la valeur du premier paramètre étant convertie au moins pour une première fraction en une modification de la valeur du deuxième paramètre,
- la valeur d'un troisième paramètre est déterminée, une modification de la valeur du troisième paramètre dépendant de la modification de la valeur du premier paramètre, et la valeur du troisième paramètre étant affichée sur la surface d'affichage (8), et
- un premier élément d'affichage (9) est généré sur la surface d'affichage (8), au moyen duquel la conversion de la modification de la valeur du premier paramètre en la modification de la valeur du deuxième paramètre est représentée de manière graphique, le premier paramètre étant une réserve d'énergie, le deuxième paramètre étant une distance parcourue et le troisième paramètre étant une autonomie résiduelle, et
- la modification du premier paramètre dépendant pour une deuxième fraction d'autres paramètres,
**caractérisé en ce que**
- la grandeur de la première fraction et la grandeur de la deuxième fraction sont déterminées,
- le premier élément d'affichage (9) est généré sur la surface d'affichage (8) sous la forme d'un premier objet allongé dans une première position d'une première longueur,
- la première longueur du premier objet allongé (9) est modifiée en une deuxième longueur en fonction de la grandeur de la deuxième fraction,
- un repère (13) est affiché,
- la conversion de la modification de la valeur du premier paramètre en la modification de la valeur du deuxième paramètre est représentée **en ce que** le premier objet allongé (9) est déplacé de la première position à une deuxième position, l'amplitude (15) du déplacement dépendant de la grandeur de la première fraction,
- après le déplacement, le premier élément d'affichage (9) est divisé à partir du repère (13) en une première partie (9.1) et une deuxième partie (9.2), la longueur (14) de la première partie (9.1) représentant la valeur du premier paramètre après la modification de la valeur du premier paramètre, et la longueur (15) de la deuxième partie représentant la valeur du deuxième paramètre après la modification de la valeur du premier paramètre,
- la valeur du troisième paramètre est représentée comme la longueur (19) d'un deuxième élément d'affichage (10) qui est affiché sur la surface d'affichage (8) de manière adjacente au premier élément d'affichage (9) sous la forme d'un deuxième objet allongé ayant une première extrémité (16) et une deuxième extrémité (17),
- la modification de la valeur du troisième paramètre en raison d'une modification du premier paramètre par rapport à la première fraction est représentée par une modification de longueur du deuxième objet allongé (10) à la première extrémité (16) selon la longueur de la deuxième partie (9.2) du premier élément d'affichage (9), et
- la modification de la valeur du troisième paramètre en raison d'une modification du premier paramètre par rapport à la deuxième fraction est représentée par une modification de longueur du deuxième objet allongé (10) à la deuxième extrémité (17).

2. Procédé selon la revendication 1, **caractérisé en ce que**
- les autres paramètres sont regroupés par catégories,
- l'influence de chaque catégorie d'autres paramètres sur la réserve d'énergie est déterminée, et
- pour chaque catégorie d'autres paramètres, un élément graphique (17.1, 17.2, 17.3) est généré sur la surface d'affichage (8) qui indique l'influence des autres paramètres sur la réserve d'énergie.

3. Procédé selon la revendication 2, **caractérisé en ce que** les éléments graphiques (17.1, 17.2, 17.3) représentent pour les différentes catégories le repère (13) qui divise le premier élément d'affichage (9) en la première partie (9.1) et en la deuxième partie (9.2), les éléments graphiques (17.1, 17.2, 17.3) comprenant au moins deux éléments indicateurs (20) dont au moins l'un est mis en évidence, le nombre des éléments indicateurs (20) mis en évidence et/ou le type de la mise en évidence des éléments indicateurs (20) indiquant l'ampleur de l'influence de la catégorie des autres paramètres sur le premier paramètre.

4. Procédé selon l'une quelconque des revendications 1, 2 ou 3, **caractérisé en ce que** les autres paramètres sont divisés en trois catégories, une première catégorie étant un mode de conduite, une deuxième catégorie étant une manière de conduire et/ou une troisième catégorie étant une navigation, la catégorie mode de conduite comprenant des configurations pour la climatisation, le comportement d'entraînement et/ou des systèmes d'assistance à la conduite, la catégorie manière de conduite comprenant des informations concernant le comportement de conduite instantané du conducteur, et la catégorie navigation comprenant des informations concernant différents itinéraires jusqu'à une destination souhaitée.

5. Procédé selon la revendication 4, **caractérisé en ce que**
- les trois catégories présentent respectivement des réglages des autres paramètres qui ont pour effet une modification faible de la réserve d'énergie, une modification moyenne de la réserve d'énergie et une modification élevée de la réserve d'énergie, et
- le deuxième élément d'affichage (10) est divisé en une première partie et une deuxième partie, la longueur de la première partie indiquant la valeur de l'autonomie résiduelle, et la longueur de la deuxième partie indiquant une valeur de laquelle la valeur de l'autonomie résiduelle est augmentée si pour les trois catégories respectivement les réglages qui ont pour effet une modification faible de la réserve d'énergie sont réglés.

6. Dispositif (2) d'affichage de paramètres de véhicule qui comprennent au moins un premier et un deuxième paramètre, comprenant
- une unité de détermination (4) qui permet de déterminer une valeur du premier paramètre et une valeur du deuxième paramètre,
- une unité d'affichage (3) dotée d'une surface d'affichage (8) sur laquelle les valeurs déterminées du premier paramètre et du deuxième paramètre peuvent être affichées,
- une unité de conversion (7) qui permet de modifier la valeur du premier paramètre, la modification de la valeur du premier paramètre pouvant être convertie en une modification de la valeur du deuxième paramètre, et
- une unité de commande (6) qui permet de piloter l'unité d'affichage (3) de telle sorte qu'un premier élément d'affichage (9) peut être généré qui permet de représenter de manière graphique la conversion de la modification de la valeur du premier paramètre en la modification de la valeur du deuxième paramètre,
- un accumulateur de réserve d'énergie (5) qui présente une réserve d'énergie, la réserve d'énergie étant le premier paramètre,
- l'unité de conversion (7) étant un moteur qui permet de convertir la réserve d'énergie en une distance parcourue, la distance parcourue étant le deuxième paramètre, et
- l'unité de détermination (4) permettant de déterminer une autonomie résiduelle à partir de la modification de la valeur de la réserve d'énergie par la conversion de la réserve d'énergie en distance parcourue, l'autonomie résiduelle étant le troisième paramètre et la valeur de l'autonomie résiduelle pouvant être affichée sur la surface d'affichage.
**caractérisé en ce que**
- l'unité de détermination (4) est aménagée pour déterminer la grandeur de la première fraction et la grandeur de la deuxième fraction,
- l'unité de commande (6) est aménagée pour piloter l'unité d'affichage (3) de telle sorte que le premier élément d'affichage (9) est généré sur la surface d'affichage (8) sous la forme d'un premier objet allongé dans une première position d'une première longueur,
- la première longueur du premier objet allongé (9) est modifiée en une deuxième longueur en fonction de la grandeur de la deuxième fraction,
- un repère (13) est affiché,
- la conversion de la modification de la valeur du premier paramètre en la modification de la valeur du deuxième paramètre est représentée **en ce que** le premier objet allongé (9) est déplacé de la première position à une deuxième position, l'amplitude (15) du déplacement dépendant de la grandeur de la première fraction,
- après le déplacement, le premier élément d'affichage (9) est divisé à partir du repère (13) en une première partie (9.1) et en une deuxième partie (9.2), la longueur (14) de la première partie (9.1) représentant la valeur du premier paramètre après la modification de la valeur du premier paramètre, et la longueur (15) de la deuxième partie représentant la valeur du deuxième paramètre après la modification de la valeur du premier paramètre,
- la valeur du troisième paramètre est représentée comme la longueur (19) d'un deuxième élément d'affichage (10) qui est affiché sur la surface d'affichage (8) de manière adjacente au premier élément d'affichage (9) sous la forme d'un deuxième objet allongé ayant une première extrémité (16) et une deuxième extrémité (17),
- la modification de la valeur du troisième paramètre en raison d'une modification du premier paramètre par rapport à la première fraction est représentée par une modification de longueur du deuxième objet allongé (10) à la première extrémité (16) selon la longueur de la deuxième partie (9.2) du premier élément d'affichage (9), et
- la modification de la valeur du troisième paramètre en raison d'une modification du premier paramètre par rapport à la deuxième fraction est représentée par une modification de longueur du deuxième objet allongé (10) à la deuxième extrémité (17).

7. Véhicule électrique (1), comprenant un dispositif (2) selon la revendication 6.
